# EUROPEAN PATENT SPECIFICATION

(11) **EP 3 211 198 B1**
(45) Date of publication and mention of the grant of the patent: **17.07.2019**
(21) Application number: 14906715.9
(22) Date of filing: 25.11.2014
(51) Int. Cl.: F02C 6/12, F02C 9/18, F04D 29/66, F04D 27/02

(54) **NOISE REDUCTION STRUCTURE OF SUPERCHARGER**
GERÄUSCHDÄMPFENDE STRUKTUR EINES TURBOLADERS
STRUCTURE DE RÉDUCTION DE BRUIT D'UN COMPRESSEUR DE SURALIMENTATION

(43) Date of publication of application: 30.08.2017
(73) Proprietor: Zhejiang Geely Automobile Research Institute Co., Ltd., Taizhou, Zhejiang 317000 (CN); Zhejiang Geely Holding Group Co., Ltd., Zhejiang 310051 (CN)
(72) Inventor: XIANG, Fuquan, Hangzhou Zhejiang 310051 (CN); XIE, Kai, Hangzhou Zhejiang 310051 (CN); JIN, Jigang, Hangzhou Zhejiang 310051 (CN); LIU, Quanyou, Hangzhou Zhejiang 310051 (CN); CUI, Facheng, Hangzhou Zhejiang 310051 (CN); WU, Chengming, Hangzhou Zhejiang 310051 (CN); FENG, Qingfeng, Hangzhou Zhejiang 310051 (CN)
(74) Representative: Ziebig, Marlene
(86) International application number: PCT/CN2014/092204
(87) International publication number: WO 2016/082111

(56) References cited:
- EP-A1- 0 468 676
- CN-A- 101 285 417
- CN-A- 102 444 743
- CN-A- 104 389 677
- CN-U- 201 786 446
- CN-U- 203 035 620
- CN-U- 204 371 483
- DE-A1-102010 044 683
- DE-B3-102009 011 938
- JP-A- 2009 209 976
- US-A- 4 304 097
- US-A1- 2006 013 682

## Description

### Technical Field

The present invention relates to the technical field of supercharged engines, and particularly, relates to a noise reduction structure of a supercharger.

### Background of the Invention

With increasingly high requirements of customers on vehicle fuel economy and dynamic property, vehicles adopting supercharged engines are developed increasingly fast at present. However, with the use of a supercharged engine, bad noise such as supercharger gas relief noise (when an accelerator is released, a throttle is closed but the supercharger still works, the pressure between the supercharger and the throttle is increased sharply, the high pressure needs to be relieved in order to ensure drivability, and gas relief noise is produced with the relief of the high pressure gas, particularly under the working condition that the accelerator is released urgently), supercharger howling, supercharger surge and the like may be produced, thus influencing the subjective feeling of customers.

Currently, universal methods for solving the problem of supercharger gas relief noise include: 1, enlarging a relief channel in the supercharger; 2, adding silencers to the inlet and outlet of the supercharger; 3, adjusting ECU (Electronic Control Unit) calibration data, and controlling the pressure relief time (to control the pressure value during pressure relief and eliminate the gas relief noise); 4, changing the internal pressure relief manner of the supercharger into an external one (relative to the supercharger), which is realized by a three-way electromagnetic valve (controlled by an ECU and negative pressure of a manifold), a mechanical relief valve (controlled by an electromagnetic valve) and connecting pipelines thereof; and 5, changing the internal pressure relief manner of the supercharger into an external one, which is realized by a relief valve electromagnetic valve, a silencer and a connecting pipeline thereof.

The above five methods eliminate the gas relief noise to a certain extent, but the effect of eliminating the gas relief noise is still poor, and some improvement methods are high in cost, e.g., the method 4.

Noise reduction structures of a supercharger according to the prior art are known from the documents EP 0468676 A1, DE 10 2009 011938 B3 and CN 203 035 620 U.

### Summary of the Invention

One aim of the present invention is to provide a noise reduction structure of a supercharger with good effect of eliminating gas relief noise at low cost.

The present invention provides a noise reduction structure of a supercharger, including a relief channel of the supercharger and a silencing assembly, wherein the relief channel is provided with a high pressure pipeline and a low pressure pipeline; the silencing assembly is arranged at a gas circulation position between the high pressure pipeline and the low pressure pipeline, provided with a plurality of vent holes having a diameter ranging from 1 mm to 2 mm and configured in such a way that high pressure gas only enters the low pressure pipeline after passing through the vent holes when the high pressure pipeline is communicated with the low pressure pipeline, wherein the gas outlet end of the high pressure pipeline is inserted into the low pressure pipeline; the silencing assembly is sleeved at the gas outlet end of the high pressure pipeline, and is connected with the high pressure pipeline in a sealed manner.

Further, the silencing assembly is of a tubular structure, and the plurality of vent holes are formed in the tubular wall of the silencing assembly.

Further, the plurality of vent holes are uniformly distributed along the tubular wall of the silencing assembly, and the distance between every two vent holes is 6 to 7 times the diameter of the vent holes.

Further, the noise reduction structure also includes: a relief valve, arranged at the connector between the high pressure pipeline and the low pressure pipeline which are isolated or communicated by controlling the opening and closing of the relief valve.

Further, a valve seat of the relief valve is integrated on the supercharger, the inner cavity of the valve seat forms a part of the low pressure pipeline, and the gas outlet end of the high pressure pipeline is arranged in the inner cavity of the valve seat; a gate of the relief valve presses against the gas outlet end of the high pressure pipeline, and the gate closes the gas outlet end of the high pressure pipeline when the relief valve is closed; and when the relief valve is opened, a gas outlet channel is formed between the gate and the gas outlet end of the high pressure pipeline.

Further, the silencing assembly is arranged in the inner cavity of the valve seat and sleeved outside the gas outlet end of the high pressure pipeline, one end of the silencing assembly is connected with the inner wall of the inner cavity of the valve seat in a sealed manner, and the other end of the silencing assembly is connected with the outer wall of the high pressure pipeline in a sealed manner.

The silencing principle of the silencing assembly is established on the basis that air can reduce audible jet noise when passing through small-diameter vent holes; when gas in the high pressure pipeline enters the low pressure pipeline, the gas can only enter the low pressure pipeline from the plurality of vent holes having the diameter of less than 20 mm, and the jet noise is reduced when the gas passes through the vent holes, so that the voiced frequency of gas relief noise in the pressure relief process is reduced, the frequency of the gas relief noise is turned to an ear-insensitive range, and the effect of reducing noise is thus achieved. The silencing assembly is arranged in the relief channel of the supercharger and is easy to install and add without excessive complex structures, and compared with the silencer in the prior art, unexpected silencing effect can be achieved only by the structural assembly with a plurality of vent holes having the diameter of less than 20 mm, and the cost is lower.

### Brief Description of the Drawings

Fig. 1 is a schematic diagram of an external structure of a relief structure of a supercharger in the prior art;
Fig. 2 is a schematic diagram of an internal structure of the relief structure of the supercharger in the prior art;
Fig. 3 is a schematic diagram of the internal structure when a relief valve in the relief structure of the supercharger in Fig. 2 is opened;
Fig. 4 is a schematic diagram of a noise reduction structure of a supercharger in one embodiment of the present invention;
Fig. 5 is a schematic diagram of an internal structure when a relief valve in the noise reduction structure of the supercharger in Fig. 4 is opened;
Fig. 6 is a schematic diagram of a silencing assembly of the noise reduction structure of the supercharger in Fig. 4.

### Detailed Description of the Invention

Described below are specific embodiments of the present invention, the technical solution of the present invention will be further described in combination with the specific embodiments and the accompanying drawings, but the present invention is not limited to these embodiments.

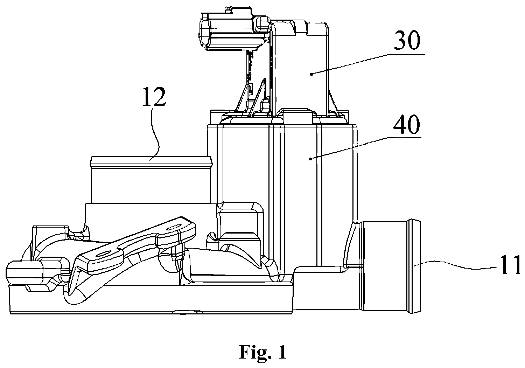

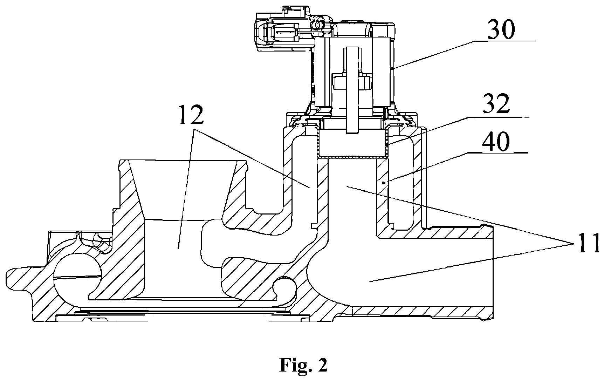

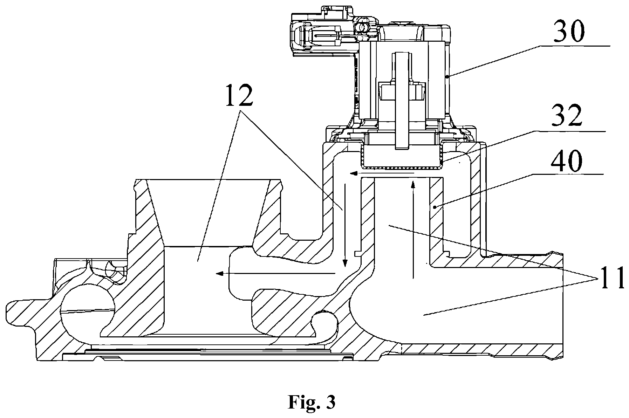

A noise reduction structure of a supercharger in this embodiment is used in the field of automobiles. For a relief structure of a supercharger in the prior art, reference may be made to Fig. 1 to Fig. 3, which show a structure in which a relief channel is integrated on the supercharger of an automobile engine and pressure relief is controlled by a relief valve, wherein a valve seat of the relief valve 30 is integrated on the supercharger 40, the relief channel of the supercharger 40 includes a high pressure pipeline 11 and a low pressure pipeline 12, a gate 32 of the relief valve 30 presses against the gas outlet end of the high pressure pipeline 11, Fig. 2 is a schematic diagram showing that the gate 32 closes the high pressure pipeline 11, Fig. 3 is a schematic diagram showing that the gate 32 is opened and a gas flow channel is formed between the gate 32 and the gas outlet end of the high pressure pipeline 11 so that the high pressure pipeline 11 is communicated with the low pressure pipeline 12 to relieve pressure, and the arrow directions shown by the high pressure pipeline 11 and the low pressure pipeline 12 in Fig. 3 are gas flowing directions.

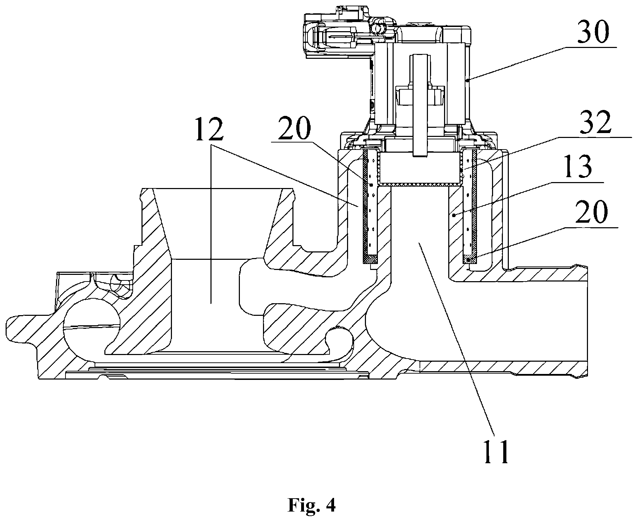

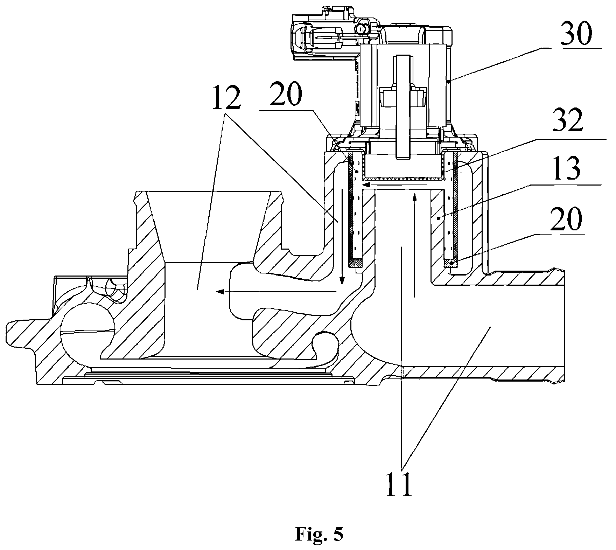

Fig. 4 is a schematic diagram of a noise reduction structure of a supercharger in one embodiment of the present invention. The noise reduction structure is also applied to such a structure in which a relief channel is integrated on the supercharger and pressure relief is controlled by a relief valve. The noise reduction structure of the supercharger in this embodiment includes a relief channel of the supercharger 40 and a silencing assembly 20, the relief channel is provided with a high pressure pipeline 11 and a low pressure pipeline 12, and the silencing assembly 20 is arranged at a gas circulation position between the high pressure pipeline 11 and the low pressure pipeline 12, provided with a plurality of vent holes 21 having the diameter of less than 20 mm, and configured in such a way that high pressure gas only enters the low pressure pipeline 12 after passing through the vent holes 21 when the high pressure pipeline 11 is communicated with the low pressure pipeline 12. It can be seen from Fig. 5 that in the pressure relief process, high pressure gas passing through the high pressure pipeline 11 passes through the vent holes 21 of the silencing assembly 20 and then enters the low pressure pipeline 12, wherein the arrow directions in Fig. 5 are gas circulation directions.

The silencing principle of the silencing assembly 20 in this embodiment is established on the basis that air can reduce audible jet noise when passing through small-diameter vent holes. In the pressure relief process, high pressure gas enters the low pressure pipeline from the high pressure pipeline 11, the gas can only enter the low pressure pipeline 12 from the plurality of vent holes 21 having the diameter of less than 20 mm, and the jet noise is reduced when the gas passes through the vent holes 21, so that the voiced frequency of gas relief noise in the pressure relief process is reduced, the frequency of the gas relief noise is turned to an ear-insensitive range, and the effect of reducing noise is thus achieved. The silencing assembly in this embodiment is arranged in the relief channel of the supercharger and is easy to install and add without excessive complex structures, and compared with the silencer in the prior art, an unexpected silencing effect can be achieved only by the structural assembly with a plurality of vent holes having the diameter of less than 20 mm, and the cost is lower.

As shown in Fig. 4 and Fig. 5, the noise reduction structure further includes a relief valve 30, the relief valve 30 is arranged at the connector between the high pressure pipeline 11 and the low pressure pipeline 12, the high pressure pipeline 11 and the low pressure pipeline 12 are isolated or communicated by controlling the opening and closing of the relief valve 30, wherein Fig. 4 is a structural schematic diagram showing when the relief valve 30 isolates the high pressure pipeline 11 from the low pressure pipeline 12, and the gate 32 of the relief valve 30 presses against the gas outlet end 13 of the high pressure pipeline 11. Fig. 5 shows when the relief valve 30 is opened, a gas circulation space is formed between the gate 32 and the gas outlet end 13 of the high pressure pipeline 11, and gas enters the low pressure pipeline 12 via the silencing assembly 20, wherein the arrow directions in Fig. 5 are gas circulation directions.

More specifically, a valve seat of the relief valve 30 is integrated on the supercharger 40, the inner cavity 31 of the valve seat forms a part of the low pressure pipeline 12, and the gas outlet end 13 of the high pressure pipeline 11 is arranged in the inner cavity 31 of the valve seat. The silencing assembly 20 is arranged in the inner cavity 31 of the valve seat and sleeved outside the gas outlet end 13 of the high pressure pipeline 11, one end of the silencing assembly 20 is connected with the inner wall of the inner cavity 31 of the valve seat in a sealed manner, and the other end of the silencing assembly 20 is connected with the outer wall of the high pressure pipeline 11 in a sealed manner.

The gate 32 of the relief valve 30 presses against the gas outlet end 13 of the high pressure pipeline 11, and the gate 32 closes the gas outlet end 13 of the high pressure pipeline 11 when the relief valve 30 is closed; and when the relief valve 30 is opened, a gas outlet channel is formed between the gate 32 and the gas outlet end 13 of the high pressure pipeline 11, and the silencing assembly 20 is just arranged on the gas outlet channel, so that circulated gas is circulated from the vent holes to the low pressure pipeline 12 to complete silencing.

The gas outlet end 13 of the high pressure pipeline 11 is inserted into the low pressure pipeline 12. The silencing assembly 20 is sleeved at the gas outlet end 13 of the high pressure pipeline 11, and is connected with the high pressure pipeline 11 in a sealed manner.

It can be seen according to Fig. 4 and Fig. 5 that compared with the relief structure of the supercharger shown in Fig. 1 to Fig. 3, the embodiment of the noise reduction structure of the supercharger provided by the present invention has the advantages that the silencing assembly 20 is sleeved between the outer side of the gas outlet end 13 of the high pressure pipeline 11 and the inner side of the low pressure pipeline 12, a part of space formed between the inner wall of the low pressure pipeline 12 and the outer wall of the high pressure pipeline 11 can be used for placing the silencing assembly 20 because the pipe diameter of the low pressure pipeline 12 is greater than that of the high pressure pipeline 11, and the silencing assembly 20 is just arranged in the space, so that the gas relief noise can be directly reduced without adding other complex structures.

Besides, the gate 32 of the relief valve 30 penetrates through the inner side of the silencing assembly 20 and presses against the gas outlet end 13 of the high pressure pipeline 11, and one end, matched with the gate 32, of the silencing assembly 20 is connected with the relief valve 30 in a sealed manner and simultaneously connected with the side wall of the inner cavity 31 of the valve seat in a sealed manner too, so that gas in the high pressure pipeline 11 can only flow to the low pressure pipeline 12 via the vent holes of the silencing assembly 20, and noise is reduced in this process.

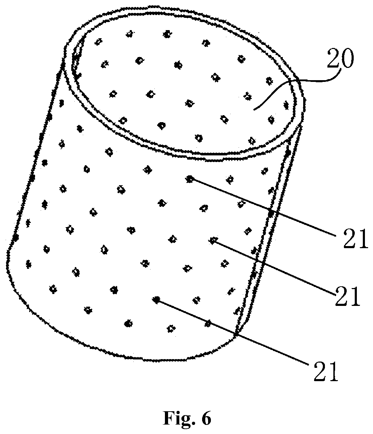

Further, preferably, the silencing assembly 20 is of a tubular structure, the plurality of vent holes 21 are formed in the tubular wall of the silencing assembly 20, and the plurality of vent holes 21 are uniformly distributed along the tubular wall of the silencing assembly 20, referring to the silencing assembly shown in Fig. 6. The silencing assembly is generally made in a round or cylindrical tube shape, and can also be made into a square or special-shaped tubular structure or the like according to needs of actual space and arrangement.

Under the condition of silencing via the silencing assembly, the diameter of the vent holes 21 can be changed, so that the acoustical power behind each octave band measuring plate is reduced, and the octave band is pushed to a higher ear-insensitive range. When the hole diameter is large (11.8-20.08 mm), about 9dB can be reduced. When the hole diameter is relatively small, e.g., the diameter of the vent holes 21 is 1-2 mm, each octave band of small-hole noise and A acoustical power can be reduced by about 15dB; when the diameter of the vent holes is reduced, not only can the acoustical power of noise produced in unit area be reduced, but also the central band of the highest acoustic pressure level can be pushed upwardly to 1 octave band. Thus, if the hole diameter is smaller, the band occupying the principal component is higher; when the central band is over 8000Hz, human ears are insensitive to noise, so that the subjective feeling of human ears on noise can also be reduced; under equal flow rate, a large hole can be replaced by a lot of small holes, which not only can reduce the A acoustic level, but also can eliminate jet impulsive noise. In the practical manufacturing and using process, the diameter of the vent holes 21 ranges from 1 mm to 2 mm, and when the distance between every two vent holes 21 is 6 to 7 times the diameter of the vent holes 21, the gas passing quantity and silencing effect of the silencing assembly are optimal.

In one embodiment not shown and not forming part of the claimed invention, the silencing assembly 20 is different from the tubular silencing assembly in the above embodiment and is a silencing plate with vent holes 21, the silencing plate is arranged at the gas outlet end 13 of the high pressure pipeline 11, and the circumference of the silencing plate is connected to the inner wall of the high pressure pipeline 11 in a sealed manner. In other embodiments not shown, the diameter and distance of the vent holes 21 of the silencing assembly can be determined according to actual noise reduction needs, or the tubular silencing assembly is replaced by using a netlike object with vent holes, and the size, shape and distance of meshes can be determined according to actual noise reduction needs.

In other embodiments, the relief channel of the supercharger is arranged outside the supercharger, the relief channel is not integrated with the supercharger and is independent from the supercharger, this structure is not the same as the external structure of the above embodiment but is still the one in which the high pressure pipeline is connected with the low pressure pipeline and pressure relief is controlled by a relief valve, and its principle is consistent with the principle of the supercharger integrated with the relief channel. The silencing assembly is arranged at the gas circulation position between the high pressure pipeline and the low pressure pipeline, provided with a plurality of vent holes having the diameter of less than 20 mm, and configured in such a way that high pressure gas only enters the low pressure pipeline after passing through the vent holes when the high pressure pipeline is communicated with the low pressure pipeline, so that this noise reduction structure still can achieve the above technical effects and thus is not redundantly described herein.

The scope of the invention is defined by the appended claims.

## Claims

1. A noise reduction structure of a supercharger, comprising:
a relief channel of the supercharger (40), wherein the relief channel is provided with a high pressure pipeline (11) and a low pressure pipeline (12); and
a silencing assembly (20), arranged at a gas circulation position between the high pressure pipeline (11) and the low pressure pipeline (12), provided with a plurality of vent holes (21) having a diameter ranging from 1 mm to 2 mm, and configured in such a way that high pressure gas only enters the low pressure pipeline (12) after passing through the vent holes (21) when the high pressure pipeline (11) is communicated with the low pressure pipeline (12),
wherein the gas outlet end (13) of the high pressure pipeline (11) is inserted into the low pressure pipeline (12);
the silencing assembly (20) is sleeved at the gas outlet end (13) of the high pressure pipeline (11), and is connected with the high pressure pipeline (11) in a sealed manner.

2. The noise reduction structure of claim 1, wherein the silencing assembly (20) is of a tubular structure and the plurality of vent holes (21) are formed in the tubular wall of the silencing assembly (20).

3. The noise reduction structure of claim 2, wherein the plurality of vent holes (21) are uniformly distributed along the tubular wall of the silencing assembly (20), and the distance between every two vent holes (21) is 6 to 7 times the diameter of the vent holes (21).

4. The noise reduction structure of claim 1, further comprising:
a relief valve (30), arranged at a connector between the high pressure pipeline (11) and the low pressure pipeline (12) which are isolated or communicated by controlling the opening and closing of the relief valve (30).

5. The noise reduction structure of claim 4, wherein
a valve seat of the relief valve (30) is integrated on the supercharger (40), an inner cavity (31) of the valve seat forms a part of the low pressure pipeline (12), and the gas outlet end (13) of the high pressure pipeline (11) is arranged in the inner cavity (31) of the valve seat;
a gate (32) of the relief valve (30) presses against the gas outlet end (13) of the high pressure pipeline (11), and the gate (32) closes the gas outlet end (13) of the high pressure pipeline (11) when the relief valve (30) is closed; and when the relief valve (30) is opened, a gas outlet channel is formed between the gate (32) and the gas outlet end (13) of the high pressure pipeline (11).

6. The noise reduction structure of claim 5, wherein the silencing assembly (20) is arranged in the inner cavity (31) of the valve seat and sleeved outside the gas outlet end (13) of the high pressure pipeline (11), one end of the silencing assembly (20) is connected with the inner wall of an inner cavity (31) of the valve seat in a sealed manner, and the other end of the silencing assembly (20) is connected with an outer wall of the high pressure pipeline (11) in a sealed manner.

## Patentansprüche

1. Geräuschdämpfende Struktur eines Turboladers, umfassend:
einen Entlastungskanal des Turboladers (40), wobei der Entlastungskanal mit einer Hochdruckrohrleitung (11) und einer Niederdruckrohrleitung (12) versehen ist; und
eine Schalldämpfungsanordnung (20), die an einer Gaszirkulationsposition zwischen der Hochdruckrohrleitung (11) und der Niederdruckrohrleitung (12) angeordnet, mit einer Mehrzahl von Durchlasslöchern (21) mit einem Durchmesser im Bereich von 1 mm bis 2 mm versehen und derart ausgestaltet ist, dass Hochdruckgas nur dann nach einem Passieren der Durchlasslöcher (21) in die Niederdruckrohrleitung (12) eintritt, wenn die Hochdruckrohrleitung (11) mit der Niederdruckrohrleitung (12) in Verbindung steht,
wobei das Gasauslassende (13) der Hochdruckrohrleitung (11) in die Niederdruckrohrleitung (12) eingeführt ist;
die Schalldämpfungsanordnung (20) an dem Gasauslassende (13) der Hochdruckrohrleitung (11) aufgesteckt ist und abgedichtet mit der Hochdruckrohrleitung (11) verbunden ist.

2. Geräuschdämpfende Struktur nach Anspruch 1, wobei die Schalldämpfungsanordnung (20) eine röhrenförmige Struktur aufweist und die Mehrzahl von Durchlasslöchern (21) in der röhrenförmigen Wand der Schalldämpfungsanordnung (20) ausgebildet ist.

3. Geräuschdämpfende Struktur nach Anspruch 2, wobei die Mehrzahl von Durchlasslöchern (21) einheitlich entlang der röhrenförmigen Wand der Schalldämpfungsanordnung (20) verteilt ist und der Abstand zwischen jeweils zwei Durchlasslöchern (21) dem 6-bis 7fachen des Durchmessers der Durchlasslöcher (21) entspricht.

4. Geräuschdämpfende Struktur nach Anspruch 1, ferner umfassend:
ein Entlastungsventil (30), das an einem Verbindungsstück zwischen der Hochdruckrohrleitung (11) und der Niederdruckrohrleitung (12) angeordnet ist, die durch Steuern des Öffnens und Schließens des Entlastungsventils (30) isoliert oder in Verbindung gebracht werden.

5. Geräuschdämpfende Struktur nach Anspruch 4, wobei:
ein Ventilsitz des Entlastungsventils (30) auf dem Turbolader (40) integriert ist,
ein innerer Hohlraum (31) des Ventilsitzes einen Teil der Niederdruckrohrleitung (12) ausbildet und das Gasauslassende (13) der Hochdruckrohrleitung (11) in dem inneren Hohlraum (31) des Ventilsitzes angeordnet ist;
ein Ventilkörper (32) des Entlastungsventils (30) gegen das Gasauslassende (13) der Hochdruckrohrleitung (11) drückt und der Ventilkörper (32) das Gasauslassende (13) der Hochdruckrohrleitung (11) verschließt, wenn das Entlastungsventil (30) geschlossen ist; und wenn das Entlastungsventil (30) geöffnet ist, zwischen dem Ventilkörper (32) und dem Gasauslassende (13) der Hochdruckrohrleitung (11) ein Gasauslasskanal ausgebildet wird.

6. Geräuschdämpfende Struktur nach Anspruch 5, wobei die Schalldämpfungsanordnung (20) in dem inneren Hohlraum (31) des Ventilsitzes angeordnet und außerhalb des Gasauslassendes (13) der Hochdruckrohrleitung (11) aufgesteckt ist, ein Ende der Schalldämpfungsanordnung (20) abgedichtet mit der Innenwand eines inneren Hohlraums (31) des Ventilsitzes verbunden ist und das andere Ende der Schalldämpfungsanordnung (20) abgedichtet mit einer Außenwand der Hochdruckrohrleitung (11) verbunden ist.

## Revendications

1. Structure de réduction de bruit d'un compresseur de suralimentation, comprenant :
un canal de décharge du compresseur de suralimentation (40), le canal de décharge étant fourni avec une conduite à haute pression (11) et une conduite à basse pression (12) ; et
un assemblage réducteur de bruit (20), disposé à une position de circulation de gaz entre la conduite à haute pression (11) et la conduite à basse pression (12), muni d'une pluralité d'évents (21) ayant un diamètre dans la plage de 1 mm à 2 mm, et configuré de telle sorte que du gaz à haute pression pénètre dans la conduite à basse pression (12) uniquement après avoir traversé les évents (21) lorsque la conduite à haute pression (11) est en communication avec la conduite à basse pression (12),
l'extrémité de sortie de gaz (13) de la conduite à haute pression (11) étant insérée dans la conduite à basse pression (12) ;
l'assemblage réducteur de bruit (20) étant enfilé sur l'extrémité de la sortie de gaz (13) de la conduite à haute pression (11), et étant raccordé avec la conduite à haute pression (11) de manière étanche.

2. Structure de réduction de bruit selon la revendication 1, l'assemblage réducteur de bruit (20) étant une structure tubulaire et la pluralité d'évents (21) étant formés dans la paroi tubulaire de l'assemblage réducteur de bruit (20).

3. Structure de réduction de bruit selon la revendication 2, la pluralité d'évents (21) étant uniformément distribués le long de la paroi tubulaire de l'assemblage réducteur de bruit (20), et la distance respective entre deux évents (21) étant égale à 6 à 7 fois le diamètre des évents (21).

4. Structure de réduction de bruit selon la revendication 1, comprenant en outre :
une soupape de décharge (30), disposée sur un connecteur entre la conduite à haute pression (11) et la conduite à basse pression (12) qui sont isolées ou mises en communication en contrôlant l'ouverture et la fermeture de la soupape de décharge (30).

5. Structure de réduction de bruit selon la revendication 4,
un siège de soupape de la soupape de décharge (30) étant intégré au compresseur de suralimentation (40),
une cavité intérieure (31) du siège de soupape formant une partie de la conduite à basse pression (12), et l'extrémité de sortie de gaz (13) de la conduite à haute pression (11) étant disposée dans la cavité intérieure (31) du siège de soupape ;
un obturateur (32) de la soupape de décharge (30) étant appuyé contre l'extrémité de sortie de gaz (13) de la conduite à haute pression (11), et l'obturateur (32) fermant l'extrémité de sortie de gaz (13) de la conduite à haute pression (11) lorsque la soupape de décharge (30) est fermée ; et lorsque la soupape de décharge (30) est ouverte, un canal de sortie de gaz étant formé entre l'obturateur (32) et l'extrémité de sortie de gaz (13) de la conduite à haute pression (11).

6. Structure de réduction de bruit selon la revendication 5, l'assemblage réducteur de bruit (20) étant disposé dans la cavité intérieure (31) du siège de soupape et enfilé à l'extérieur de l'extrémité de sortie de gaz (13) de la conduite à haute pression (11), une extrémité de l'assemblage réducteur de bruit (20) étant raccordée de manière étanche à la paroi intérieure d'une cavité intérieure (31) du siège de soupape, et l'autre extrémité de l'assemblage réducteur de bruit (20) étant raccordée de manière étanche à une paroi extérieure de la conduite à haute pression (11).
